# EUROPEAN PATENT APPLICATION

(11) **EP 3 346 615 A1**
(43) Date of publication of application: **11.07.2018**
(21) Application number: 17210993.6
(22) Date of filing: 28.12.2017
(51) Int. Cl.: H04B 7/06, H04B 7/08

(54) **ELECTRONIC DEVICE, METHOD FOR CONTROLLING THEREOF AND COMPUTER-READABLE RECORDING MEDIUM**

(30) Priority: 05.01.2017 KR 20170001982
(71) Applicant: Samsung Electronics Co., Ltd., Gyeonggi-do 16677 (KR)
(72) Inventor: SEO, Dong-uk, Chungcheongnam-do (KR); SHIN, Jong-min, Gyeonggi-do (KR); BAE, Bum-youl, Gyeonggi-do (KR); YUN, Geun-sik, Gyeonggi-do (KR); LEE, Chang-rok, Seoul (KR); JO, Chang-lae, Gyeonggi-do (KR)
(74) Representative: Appleyard Lees IP LLP

(57) **Abstract**

An electronic apparatus is provided. The electronic device includes a plurality of multi-band antennas configured to transmit and receive data to and from an access point, and a processor configured to transmit and receive predetermined data to and from the access point through each of the plurality of multi-band antennas and calculate a data transmission rate of each of the plurality of multi-band antennas, and to select at least one multi-band antenna for transmitting and receiving data to and from the access point based on the calculated data transmission rates.

## Description

### CROSS-REFERENCE TO RELATED APPLICATIONS

This application claims priority from Korean Patent Application No. 10-2017-0001982, filed in the Korean Intellectual Property Office on January 5, 2017, the disclosure of which is incorporated herein by reference in its entirety.

### BACKGROUND

### 1. Field

Aspects of the example embodiments relate to an electronic device, a control method thereof, and a computer readable recording medium, more particularly, to an electronic device able to select the most suitable antenna for data transmission and reception, a control method thereof, and a computer readable recording medium.

### 2. Description of the Related Art

With the development of wireless communication technology, a frequency and a required frequency bandwidth used in a wireless communication device have increased, and the number of antennas for responding to a corresponding frequency has also increased.

The devices which transmit and receive data using a wireless communication technique are generally configured to be fixed in an access point (AP) or in a certain position in a client terminal, and to use the antenna which transmits only a designated frequency.

However, most of the antennas provided in an electronic device are designed to be used irrespective of a communication environment. Accordingly, although the antenna itself may have an omnidirectional bean pattern, which is the most efficient pattern on the ground, if the antenna is applied to a product, the antenna may be affected by another component and have directivity.

Further, as the antenna provided in the conventional electronic device is designed to be used irrespective of a communication environment, there has been a problem of inefficient use of an antenna in such a situation where an access point or a client terminal is moved or rotates or where an obstacle is present between an access point and a client terminal.

Accordingly, the need for the technique of selecting an appropriate antenna for the most efficient data transmission and reception in various communication situations has been emerged.

### SUMMARY

An aspect of example embodiments relates to an electronic device which selects the most suitable antenna for transmitting and receiving data, a controlling method thereof, and a computer readable recording medium.

According to an example embodiment, an electronic device is provided, the electronic device including a plurality of multi-band antennas configured to transmit and receive data to and from an access point; and a processor configured to transmit and receive predetermined data to and from the access point through each of the plurality of multi-band antennas and calculate a data transmission rate of each of the plurality of multi-band antennas, and to select at least one multi-band antenna for transmitting and receiving data to and from the access point based on the calculated data transmission rates.

The processor may transmit and receive predetermined data to and from the access point through each of the plurality of multi-band antennas and determine a modulation and coding scheme (MCS) level of each of the plurality of multi-band antennas, and calculate the data transmission rate based on the determined MCS level.

The processor may receive a response for normally transmitted data among data transmitted to the access point to calculate a data transmission rate, and determine an average value of the MCS levels of the normally transmitted data as an MCS level of a multi-band antenna which transmits the normally transmitted data.

The electronic device may further include a switch configured to select one channel band capable of transmitting and receiving data from among a plurality of channel bands of the plurality of multi-band antennas, wherein the processor may calculate a data transmission rate of each of the plurality of multi-band antennas in the plurality of channel bands, select a multi-band antenna with the highest data transmission rate and a channel band thereof, and transmit and receive data to and from the access point in the selected channel band through the selected multi-band antenna.

The processor may determine a plurality of antenna modes, in each of which the plurality of multi-band antennas are combined, and select at least one multi-band antenna included in an antenna mode with the highest data transmission rate among the determined plurality of antenna modes as at least one multi-band antenna for transmitting and receiving data to and from the access point.

The processor may adjust a ratio of a time of each of the plurality of antenna modes for which data is transmitted and received based on an order of data transmission rates of the plurality of antenna modes.

The processor may calculate a data transmission rate of each of the plurality of multi-band antennas according to a predetermined period, and select at least one multi-band antenna for transmitting and receiving data to and from the access point.

According to an example embodiment, a control method of an electronic device is provided, the method including transmitting and receiving predetermined data to and from an access point through each of a plurality of multi-band antennas configured to transmit and receive data to and from the access point; calculating a data transmission rate of each of the plurality of multi-band antennas based on the transmitted and received predetermined data; and selecting at least one multi-band antenna for transmitting and receiving data to and from the access point based on the calculated data transmission rates.

The calculating may include determining a modulation and coding scheme (MCS) level of each of the plurality of multi-band antennas based on the transmitted and received predetermined data and calculating the data transmission rates based on the determined MCS levels.

The transmitting and receiving may include transmitting data for calculating a data transmission rate to the access point, and the determining the level comprises receiving a response for normally transmitted data among transmitted data for calculating a data transmission rate, and determining an average value of the MCS levels of the normally transmitted data as an MCS level of a multi-band antenna which transmits the normally transmitted data.

The calculating may include calculating a data transmission rate of each of the plurality of multi-band antennas in a plurality of channel bands, and the selecting comprises selecting a multi-band antenna with the highest transmission rate and a channel band thereof, and transmitting and receiving data to and from the access point in the selected channel band through the selected multi-band antenna.

The selecting may include determining a plurality of antenna modes, in each of which the plurality of multi-band antennas are combined, and selecting at least one multi-band antenna included in an antenna mode with the highest data transmission rate among the plurality of determined antenna modes as at least one multi-band antenna for transmitting and receiving data to and from the access point.

The method may further include adjusting a ratio of a time of each of the plurality of antenna modes for which data is transmitted and received based on an order of data transmission rates of the plurality of antenna modes.

The selecting may include calculating a data transmission rate of each of the plurality of multi-band antennas according to a predetermined period and selecting at least one multi-band antenna for transmitting and receiving data to and from the access point.

A computer readable recording medium including a program for performing a control method of an electronic apparatus is provided, the method including transmitting and receiving predetermined data to and from an access point through each of a plurality of multi-band antennas configured to transmit and receive data to and from the access point; calculating a data transmission rate of each of the plurality of multi-band antennas based on the transmitted and received predetermined data; and selecting at least one multi-band antenna for transmitting and receiving data to and from the access point based on the calculated data transmission rates.

### BRIEF DESCRIPTION OF THE DRAWINGS

FIG. 1 is a diagram illustrating a wireless communication system according to an example embodiment;
FIG. 2 is a block diagram illustrating a configuration of an electronic device according to an example embodiment;
FIG. 3 is a block diagram illustrating a specific configuration of an electronic device according to an example embodiment;
FIG. 4 is a flowchart illustrating a control method of an electronic device according to an example embodiment;
FIG. 5 is a flowchart illustrating a control method of an electronic device according to another example embodiment;
FIG. 6 is a flowchart illustrating an operation of transmitting data in an electronic device according to an example embodiment; and
FIG. 7 is a flowchart illustrating an operation of receiving data in an electronic device according to an example embodiment.

### DETAILED DESCRIPTION

The example embodiments may be diversely modified, and there may be various example embodiments, and accordingly, specific example embodiments are illustrated in the drawings and are described in detail in the detailed description. However, in certain descriptions, the terms such as "include," or "is configured to," etc. are not intended to limit the scope of the characteristics, numbers, and example embodiments, but should be understood to encompass all the modifications, equivalents or alternatives falling under the concepts and technical scope as disclosed. For reference, when it is deemed that the detailed description of the known function or configuration may obscure the gist of the embodiments in describing them, the detailed description thereof will be omitted.

The terms "first," "second," etc. may be used to describe various elements, but the elements should not be limited thereto. These terms are used only for the purpose of differentiating one component from another.

The terms used herein are only used to describe a certain embodiment, and are not intended to limit the scope of right. A singular term includes a plural form unless otherwise indicated. It shall be understood that the expressions are used only to designate presence of steps, operations, elements, parts or combination thereof, and not to foreclose the possibility of presence or possible addition of one or more other numbers, steps, operations, elements, parts or combination thereof.

In an example embodiment, 'a module' or 'a unit' performs at least one function or operation, and may be embodied as hardware, software, or combination thereof. Further, except the "modules" or "units" that have to be implemented by certain hardware, a plurality of "modules" or a plurality of "units" may be integrated into at least one module and embodied as at least one processor (not illustrated).

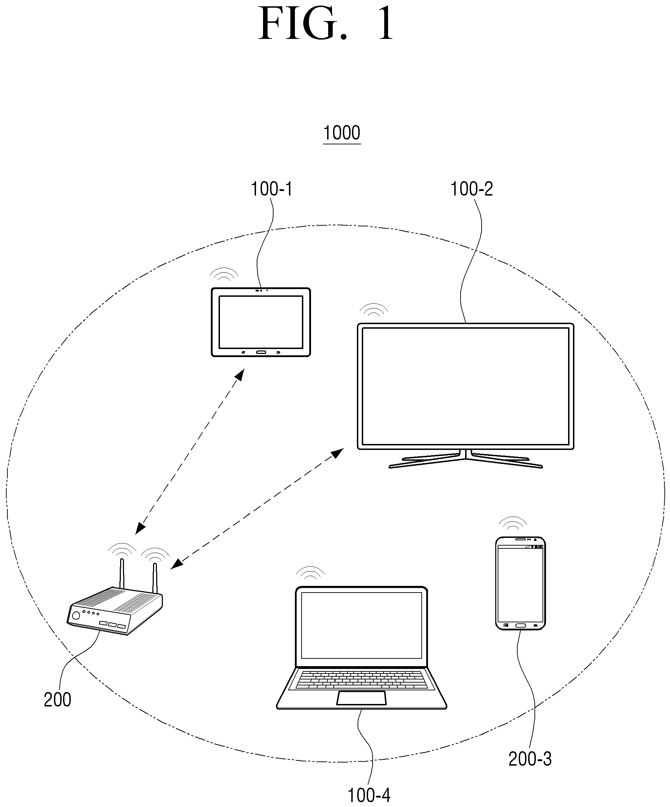

FIG. 1 is a diagram illustrating a wireless communication system according to an example embodiment.

According to FIG. 1, the wireless communication system 1000 may include a plurality of electronic devices 100-1, 100-2, 100-3 and 100-4 and an access point 200.

The plurality of electronic devices 100-1, 100-2, 100-3 and 100-4 may be a device with a relatively low mobility such as a TV or kiosks, or may be a portable device such as a mobile phone, a tablet PC, a PDA, an MP3 player, or the like.

Each of the plurality of electronic devices 100-1, 100-2, 100-3 and 100-4 may be arranged within a certain distance from the access point 200 and transmit and receive data to and from the access point 200 by a wireless communication method. For example, each of the plurality of electronic devices 100-1, 100-2, 100-3 and 100-4 may transmit and receive data to and from the access point 200 using a multi-band antenna which is able to transmit and receive data in a plurality of channel bands.

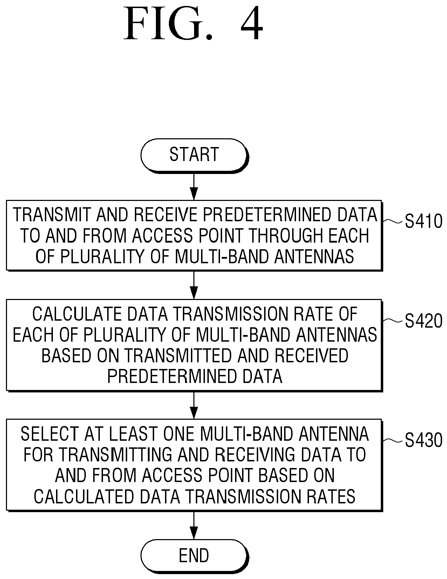

The plurality of electronic devices 100-1, 100-2, 100-3 and 100-4 may select at least one multi-band antenna as the most suitable multi-band antenna for transmitting and receiving data from among a plurality of multi-band antennas provided in the electronic devices. For example, each of the plurality of electronic devices 100-1, 100-2, 100-3 and 100-4 may transmit and receive predetermined data to and from the access point 200 through each of the plurality of provided multi-band antennas before transmitting and receiving data, calculate a data transmission rate of each of the plurality of multi-band antennas, and select at least one multi-band antenna for transmitting and receiving data based on the calculated data transmission rates. The specific method for selecting a multi-band antenna will be described with reference to FIG. 4, 5, 6 and 7.

The access point 200 is a device which supports the electronic device 100 to be connected with a wireless network. The access point 200 does not have an IP share function and may perform a wireless hub role. For example, the access point 200 may work as a mediating device which helps the electronic device 100 to be connected to a wireless network using a relevant standard such as the standard of Wi-Fi, Bluetooth, or the like.

For example, the access point 200 may be an Internet wired/wireless router, but is not limited thereto. The electronic device 100 may be a device which can perform wireless communication with the electronic device 100, or may be a device which transmits and receives data in the channel bands 2G, 3G, LTE and 5G, or the like.

If the access point 200 normally receives predetermined data transmitted from the electronic device 100, the access point 200 may inform that the data is normally transmitted by transmitting a response signal to the electronic device 100, and the electronic device 200 may select the most suitable antenna based on the response signal.

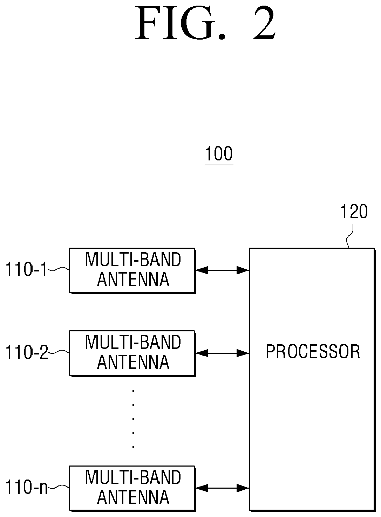

FIG. 2 is a block diagram illustrating a configuration of an electronic device according to an example embodiment.

According to FIG. 2, the electronic device 100 may include a plurality of multi-band antennas 110-1, 110-2, ..., 110-n and a processor 120.

The multi-band antennas 110-1, 110-2, ..., 110-n may refer to an antenna which can transmit and receive data in a plurality of channel bands, and the multi-band antennas may be a dual band antenna which can transmit and receive data in two bands, a triple band antenna which can transmit and receive data in three bands, or an antenna which can transmit and receive data in four or more bands. The plurality of channel bands may be the frequency used for connecting to Wi-Fi, Bluetooth, 2G, 3G, LTE or 5G.

For example, if the plurality of multi-band antennas 110-1, 110-2, ..., 110-n are implemented as a dual band antenna, each of the plurality of multi-band antennas 110-1, 110-2, ..., 110-n may transmit and receive data in the bands 2.4 GHz and 5 GHz. The band 2.4 GHz may be the frequency used for connecting to a general Wi-Fi and have a high compatibility, and the band 5 GHz may be the frequency with a high stability as the interruption from Bluetooth, a wireless keyboard, a wireless mouse, a wireless telephone, etc. is low in the band.

As described above, each of the plurality of multi-band antennas 110-1, 110-2, ..., 110-n may transmit data in all channel bands, and accordingly, the antenna which can transmit and receive data in various ways may be selected in accordance with a communication environment.

According to the example in which the plurality of multi-band antennas 110-1, 110-2, ..., 110-n are a dual band antenna, each of the plurality of multi-band antennas 110-1, 110-2, ..., 110-n may select one band between the bands 2.4 GHz and 5 GHz based on an access point or whether there is any signal interruption around the antennas, and transmit and receive data. For example, if the bands 2.4 GHz or 5 GHz is selected according to a designated frequency of an access point, or if any device which might cause a signal interruption to the frequency of a certain channel is arranged around the electronic device 100, the electronic device 100 may select one band from among a plurality of channel bands based on the selection or the arrangement described above.

FIG. 1 illustrates the example in which the multi-band antennas are a dual band antenna for ease of description, but the example embodiments are not limited thereto. In the actual embodiment, three or more multi-band antennas may be used.

The processor 120 may control overall operations of the electronic device 100. For example, the processor 120 may control overall operations of the electronic device 100 using a variety of programs stored in the electronic device 100.

The processor 120 may select at least one multi-band antenna for transmitting and receiving data to and from an access point from among the plurality of multi-band antennas 110-1, 110-2, ..., 110-n provided in the electronic device 100. For example, when the plurality of multi-band antennas 110-1, 110-2, ..., 110-n are connected with an access point, the processor 120 may transmit and receive predetermined data to and from the access point through each of the plurality of multi-band antennas 110-1, 110-2, ..., 110-n and calculate a data transmission rate of each of the plurality of multi-band antennas 110-1, 110-2, ..., 110-n. The predetermined data may be test data for calculating a data transmission rate of each of the plurality of multi-band antennas 110-1, 110-2, ..., 110-n before transmitting and receiving data. The processor 120 may select one multi-band antenna for transmitting and receiving data to and from an access point based on the calculated data transmission rates of the plurality of multi-band antennas 110-1, 110-2, ..., 110-n. For instance, the processor 120 may select the multi-band antenna with the highest data transmission rate from among the plurality of multi-band antennas 110-1, 110-2, ..., 110-n as a multi-band antenna for transmitting and receiving data to and from an access point.

When it is determined that there are a plurality of multi-band antennas for transmitting and receiving data to and from an access point by the access point, the determined number of the multi-band antennas for transmitting and receiving data to and from an access point may be selected in sequence starting from the multi-band antenna with the highest data transmission rate.

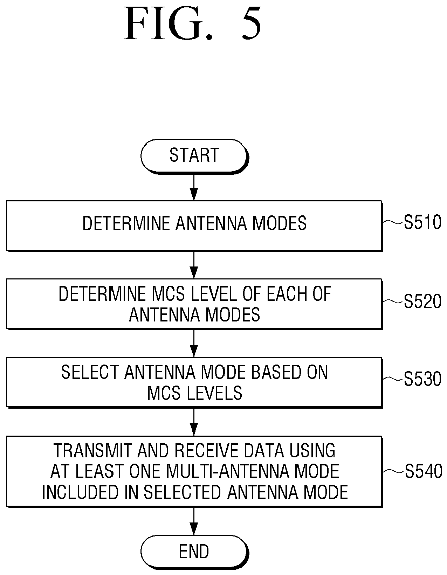

If it is determined that there are a plurality of multi-band antennas for transmitting and receiving data to and from an access point by the access point, a data transmission rate of each of antenna modes, in each of which the plurality of multi-band antennas 110-1, 110-2, ..., 110-n provided in the electronic device 100 are combined, may be determined, and the multi-band antenna for transmitting and receiving data to and from an access point may be selected. The detailed description thereof will be described with reference to FIG. 5.

The processor 120 may use a modulation and coding scheme (MCS) level for calculating a data transmission rate of the plurality of multi-band antennas 110-1, 110-2, ..., 110-n. For example, the processor 120 may transmit and receive predetermined data to and from an access point through each of the plurality of multi-band antennas 110-1, 110-2, ..., 110-n and determine an MCS level of each of the plurality of multi-band antennas 110-1, 110-2, ..., 110-n, and calculate a data transmission rate of each of the plurality of multi-band antennas 110-1, 110-2, ..., 110-n based on the determined MCS levels. The processor 120 may determine that the higher the MCS level is, the higher the data transmission rate is, and may select a multi-band antenna with a high level of MCS as the multi-band antenna for transmitting and receiving data to and from an access point.

If predetermined data is transmitted to an access point through each of the plurality of multi-band antennas 110-1, 110-2, ..., 110-n, the processor 120 may receive a response for normally received data from the access point.

For example, when an access point normally receives predetermined data which is transmitted from each of the plurality of multi-band antennas 110-1, 110-2, ..., 110-n, the access point may transmit to the multi-band antenna which transmits the predetermined data an acknowledge (ACK) which informs that the data has been normally received. The processor 120 may determine the MCS level of each piece of normally transmitted data based on the received ACK, and determine the average value of the MCS levels as an MCS level of the multi-band antenna which receives the ACK.

For example, if a plurality of ACKs are received through the first multi-band antenna, the processor 120 may determine each MCS level, and determine the determined average value of the MCS levels as an MCS level of the first multi-band antenna.

If predetermined data is received from an access point through each of the plurality of multi-band antennas 110-1, 110-2, ..., 110-n, the processor 120 may determine an MCS level of each of the multi-band antennas which receives data, and determine the multi-band antenna for transmitting and receiving data to and from the access point based on the determined MCS levels.

For example, if the electronic device 100 receives a plurality of pieces of predetermined data from an access point through the first multi-band antenna, the processor 120 may determine an MCS level of each piece of received data, and determine an average value of the determined MCS levels as an MCS level of the first multi-band antenna.

Before transmitting and receiving data to and from an access point, the processor 120 may transmit and receive predetermined data to and from an access point, calculate a data transmission rate of each of the plurality of multi-band antennas 110-1, 110-2, ..., 110-n, and determine at least one multi-band antenna which is the most suitable for transmitting and receiving data. The processor 120 may also calculate a data transmission rate of each of the plurality of multi-band antennas 110-1, 110-2, ..., 110-n based on a predetermined period and determine at least one multi-band antenna for transmitting and receiving data to and from an access point.

For example, the processor 120 may transmit and receive predetermined data to and from an access point through the plurality of multi-band antennas 110-1, 110-2, ..., 110-n based on a predetermined period, calculate a data transmission rate of each of the plurality of multi-band antennas 110-1, 110-2, ..., 110-n, and select a suitable multi-band antenna for transmitting and receiving data.

For example, data may be transmitted and received to and from an access point through the selected multi-band antenna before transmitting and receiving data, and when a predetermined period of time elapses, the processor 120 may transmit and receive predetermined data to and from an access point through the plurality of multi-band antennas 110-1, 110-2, ..., 110-n and select a suitable multi-band antenna. If a different multi-band antenna from the multi-band antenna that has transmitted and received data is selected, the processor 120 may transmit and receive data through the newly selected multi-band antenna in the subsequent data transmission and reception.

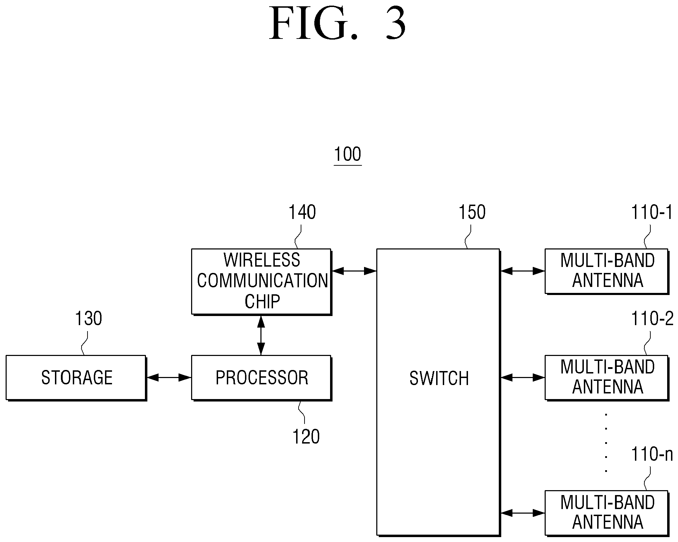

The processor 120 may select a channel band for transmitting and receiving data to and from an access point from among a plurality of channel bands in which a multi-band antenna can perform communication. The above example embodiment will be described in detail with reference to FIG. 3.

As described above, besides selecting at least one multi-band antenna for transmitting and receiving data based on a predetermined period, the processor 120 may select at least one multi-band antenna for transmitting and receiving data again if predetermined conditions are satisfied. For example, if the movement or rotation of the electronic device 100, the movement of an access point, or the presence of any obstacle between an access point and the electronic device 100 is detected by a sensor (not illustrated) provided in the electronic device 100, the processor 120 may select the most suitable multi-band antenna for transmitting and receiving data again.

FIG. 2 illustrates only the configuration of the electronic device 100, but if an access point includes a plurality of multi-band antennas and a processor, the most suitable multi-band antenna of the access point may be selected by the same operations as those of the electronic device 100 described above.

As described above, according to one or more example embodiments, by selecting a multi-band antenna for transmitting and receiving data to and from an access point based on a data transmission rate, data may be transmitted and received in an optimal state in various communication environments.

FIG. 3 is a block diagram illustrating a specific configuration of an electronic device according to an example embodiment.

According to FIG. 3, the electronic device 100 may include a plurality of multi-band antennas 110-1, 110-2, ..., 110-n, the processor 120, a storage 130, a wireless communication chip 140 and a switch 150.

The wireless communication chip 140 may include a Wi-Fi chip which performs communication by a Wi-Fi method and a Bluetooth chip which performs communication by a Bluetooth method. In the case of using a Wi-Fi chip or a Bluetooth chip, the communication information such as an SSID, a session key, etc. may be firstly transmitted and received, communication may be connected using the information, and various information may be transmitted and received.

The wireless communication chip 140 may perform communication according to various communication standards such as IEEE, 3rd Generation (3G), 3rd Generation Partnership Project (3GPP), Long Term Evolution (LTE), or the like.

The wireless communication chip 140 may include an NFC which operates by a near field communication method and uses the band 13.56MHz from among various RF-ID frequency bands such as 135kHz, 13.56MHz, 433MHz, 860-960MHz, 2.45GHz, or the like.

The plurality of multi-band antennas 110-1, 110-2, ..., 110-n may transmit and receive data in a plurality of channel bands which correspond to the communication method of the wireless communication chip 140. For example, if the wireless communication chip 140 includes a Wi-Fi chip and a Bluetooth chip, each of the plurality of multi-band antennas 110-1, 110-2, ..., 110-n may transmit and receive data in the band 2.4 GHz in which Wi-Fi operates and the band 2 GHZ in which Bluetooth operates.

The switch 150 may select a channel band of each of the plurality of multi-band antennas 110-1, 110-2, ..., 110-n for each of the plurality of multi-band antennas 110-1, 110-2, ..., 110-n to transmit and receive data in the channel band which corresponds to a selected wireless communication method depending on the wireless communication method which the processor 120 selects to transmit and receive data from among a plurality of wireless communication methods which can be performed by the wireless communication chip 140.

The processor 120 may control the wireless communication chip 140 and the switch 150 for each of the plurality of multi-band antennas 110-1, 110-2, ..., 110-n to select a channel band according to a communication method of an access point. For example, if an access point performs wireless communication by Wi-Fi, the band 2.4 GHz may be selected for each of the plurality of multi-band antennas 110-1, 110-2, ..., 110-n to transmit and receive data to and from the access point in the band.

The processor 120 may control the wireless communication chip 140 and the switch 150 for the electronic device to communicate with an access point in different channel bands depending on a communication performance in a certain channel band. For example, the processor 120 may select a channel band based on a received signal strength indication (RSSI), a signal to noise ratio (SNR), a signal to interference plus noise ratio (SINR), an error vector magnitude (EVM), or the like, which determine a communication performance in a certain band.

The processor 120 may select a channel band of each of the plurality of multi-band antennas 110-1, 110-2, ..., 110-n as 2.4 GHz, and select at least one multi-band antenna which is the most suitable for communicating with an access point. As mentioned in the description of FIG. 2, the method for selecting a multi-band antenna may be the method of sequentially selecting multi-band antennas starting from the multi-band antenna with the highest data transmission rate based on data transmission rates of the plurality of multi-band antennas 110-1, 110-2, ..., 110-n, or as illustrated in FIG. 5 below, the method may be the method of selecting the multi-band antenna(s) included in an antenna mode having the highest MCS level among a plurality of determined antenna modes, in each of which the plurality of multi-band antennas 110-1, 110-2, ..., 110-n are combined, as a multi-band antenna for transmitting and receiving data.

When an access point performs communication by a plurality of communication methods, the processor 120 may calculate a data transmission rate of each of the plurality of multi-band antennas 110-1, 110-2, ..., 110-n in each channel band, and select the multi-band antenna with the highest data transmission rate and a channel band thereof. The processor 120 may transmit and receive data to and from an access point in the selected channel band through the selected multi-band antenna.

If a plurality of multi-band antennas simultaneously communicate with a plurality of access points which perform communication by different communication methods, the processor 120 may select the most suitable multi-band antenna for communicating with one access point according to a priority order, and select the most suitable multi-band antenna for communicating with another access point from among the other of multi-band antennas except for the selected multi-band antenna. The predetermined priority order may be determined with reference to access points, or may be determined with reference to communication methods. The predetermined priority order may be set by a user manipulation.

The storage 130 may store various programs and data required for operating the electronic device 100. For example, the storage 130 may store the information on a plurality of channel bands, the information on a channel band of an access point, the value calculated from the data transmitted and received to and from an access point by the plurality of multi-band antennas 110-1, 110-2, ..., 110-n, etc., the information which are necessary for selecting a multi-band antenna.

As described above, according to various example embodiments, a multi-band antenna for transmitting and receiving data to and from an access point may be selected based on a data transmission rate, and accordingly, data may be transmitted and received in an optimal state in various communication environments.

FIG. 4 is a flowchart illustrating a control method of an electronic device according to an example embodiment.

According to FIG. 4, the electronic device may transmit and receive predetermined data to and from an access point through each of a plurality of multi-band antennas (S410). For example, the electronic device may transmit and receive predetermine data to and from an access point through each of the plurality of multi-band antenna before transmitting and receiving data to and from the access point. If predetermined conditions are satisfied while the electronic device transmits and receives the data to and from the access point, the electronic device may transmit and receive predetermine data to and from the access point. The predetermined conditions may be a predetermined period, or the event in which the movement or rotation of an access point is detected.

The electronic device may calculate a data transmission rate of each of the plurality of multi-band antennas based on transmitted and received predetermined data (S420). For example, if the electronic device transmits predetermined data to an access point, the electronic device may receive from the access point a response which informs that the data is normally received, and determine an MCS level of each of pieces of normally received data. The electronic device may determine the average value of MCS levels of normally received data as an MCS level of the multi-band antenna which transmits and receives predetermined data. The electronic device may calculate a data transmission rate of the multi-band antenna based on the MCS level.

The electronic device may select at least one multi-band antenna for transmitting and receiving data to and from an access point based on the calculated data transmission rate (S430). For example, if the calculated MCS level is high, the electronic device may determine the data transmission rate as high, and select at least one multi-band antenna with a high MCS level from among the plurality of multi-band antennas as a multi-band antenna for performing communication with an access point. If one multi-band antenna needs to be selected for communicating with the access point, the electronic device may select a multi-band antenna with the highest MCS level. If a plurality of multi-band antennas need to be selected for communicating with the access point, the electronic device may sequentially select the multi-band antennas as many as the number of multi-band antennas which should be used for the communication, starting from the multi-band antenna with the highest MCS level. Alternatively, the electronic device may select the multi-band antenna(s) included in the antenna mode with the highest MCS level among a plurality of antenna modes, in each of which the multi-band antennas may be combined as many as the number of multi-band antennas which should be used for the communication. The example embodiment of determining a plurality of antenna modes and determining a multi-band antenna for communicating with an access point will be described in greater detail with reference to FIG. 5.

According to various example embodiments described above, a multi-band antenna for transmitting and receiving data to and from an access point may be selected based on a data transmission rate, and accordingly, data may be transmitted and received in an optimal state in various communication environments.

FIG. 5 is a flowchart illustrating a control method of an electronic device according to an example embodiment.

According to FIG. 5, the electronic device may determine an antenna mode. In the antenna mode, a plurality of multi-band antennas provided in the electronic device may be combined. For example, if the number of antennas for communicating with an access point is determined, the determined number of multi-band antenna(s) may be combined in each of the antenna modes. As an example, if four multi-band antennas are provided in the electronic device, and two antennas are required for transmitting and receiving data to and from an access point, the electronic device may determine six antenna modes, in each of which two multi-band antennas from among the four multi-band antennas are combined. For instance, if the four multi-band antennas are numbered as 1, 2, 3 and 4, respectively, the determined antenna modes may be (1,2), (1,3), (1,4), (2,3), (2,4), and (3,4).

As another example, if four multi-band antennas are provided in the electronic device, and the number of antennas required for transmitting and receiving data to and from an access point is not predetermined, the electronic device may combine the multi-band antennas and determine antenna modes, in each of which various numbers of multi-band antenna(s) are included. For example, if the multi-antenna bands are numbered as 1, 2, 3 and 4, the determined antenna modes may be (1), (2), (3), (4), (1,2), (1,3), (1,4), (2,3), (2,4), (3,4), (1, 2, 3), (1, 2, 4), (1, 3, 4) and (2, 3, 4).

The electronic device may determine an MCS level for each of the determined antenna modes. For example, the electronic device may transmit and receive predetermined data to and from an access point through the multi-band antenna(s) included in each of the determined antenna modes, and determined an MCS level for each of the antennas modes. If a plurality of multi-band antennas are included in the antenna mode, the electronic device may determine an MCS level of the antenna mode which includes the plurality of multi-band antennas.

The electronic device may select an antenna mode for communicating with an access point based on the MCS level determined for each of the antenna modes (S530). For example, the antenna mode with the highest MCS level may be selected as an antenna mode for transmitting and receiving data to and from an access point from among the plurality of antenna modes.

The electronic device may transmit and receive data using at least one multi-band antenna included in the selected antenna mode (S540). The electronic device may transmit and receive data using the at least one selected antenna mode, or may adjust the ratio of the transmission and reception time according to an order of MCS levels of the plurality of antenna modes. For example, the ratio of transmission and reception time of the antenna mode with the highest MCS level may be adjusted to be the largest, and the time ratios may be adjusted to be decreased sequentially so that the antenna mode with the lowest MCS level may be adjusted to be the smallest. Accordingly, all the antenna modes may transmit and receive data according to the adjusted transmission and reception time, and if the MCS level of another antenna mode increases more than that of the selected antenna mode while data is transmitted and received sequentially through each antenna mode, the electronic device may re-adjust the ratio of transmission and reception time of each antenna mode.

As described above, according to one or more example embodiments, a multi-band antenna for transmitting and receiving data to and from an access point may be selected based on a data transmission rate, and accordingly, data transmission and reception may be performed in an optimal state in various communication environments.

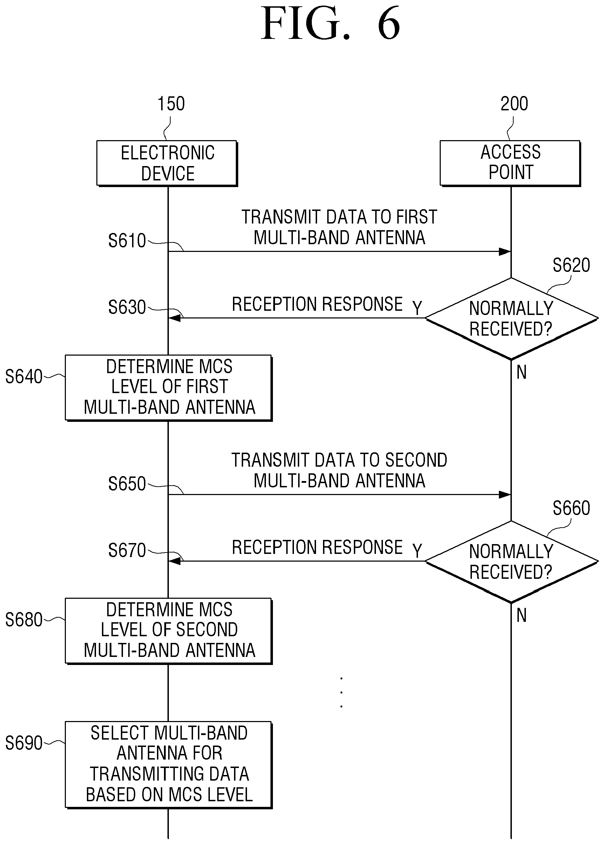

FIG. 6 is a flowchart illustrating an operation of when an electronic device transmits data.

According to FIG. 6, the electronic device 100 may transmit data to the access point 200 through the first multi-band antenna (S610). For example, if predetermined conditions are satisfied before or while the electronic device 100 transmits and receives data to and from an access point, the electronic device 100 may transmit predetermined data to the access point 200 through the first multi-band antenna. FIG. 6 illustrates the example in which predetermined data is transmitted to an access point through one multi-band antenna, but the example embodiments are not limited thereto. The first multi-band antenna may also be the first antenna mode which includes a plurality of multi-band antennas.

The access point 200 may determine whether the transmitted data is normally received (S620). If it is determined that the data which is transmitted from the electronic device 100 through the first multi-band antenna is normally received in the access point (S620-Y), the access point 200 may send to the electronic device 100 a response informing that the data is normally transmitted (S630). If the data transmitted from the electronic device 100 through the first multi-band antenna is not normally received (S620-N), a next operation may be proceeded without any response.

When the electronic device 100 receives from the access point 200 a response informing that the transmitted data is normally received, the MCS level of the first multi-band antenna may be determined based on the response (S640). For example, from among a plurality of pieces of data transmitted to the access point through the first multi-band antenna, the electronic device 100 may calculate the MCS level(s) of the data for which the electronic device 100 has received from the access point 200 the response informing that the data has been normally transmitted, and determine an average value of the calculated MCS levels as an MCS level of the first multi-band antenna.

The electronic device 100 may transmit data to the access point 200 through the second multi-band antenna (S650).

The access point 200 may determine whether the transmitted data is normally received (S660). If it is determined that the data which is transmitted from the electronic device 100 through the second multi-band antenna is normally received (S660-Y), the access point 200 may send to the electronic device 100 a response informing that the data has been normally received (S670). If the data which is transmitted from the electronic device 100 through the second multi-band antenna is not normally received in the access point (S660-N), a next operation may be proceeded without any response.

When the electronic device 100 receives from the access point 200 a response informing that the transmitted data is normally received, the electronic device 100 may determine an MCS level of the second multi-band antenna based on the response (S680). For example, from among a plurality of pieces of data transmitted to the access point through the second multi-band antenna, the electronic device 100 may calculate the MCS level(s) of the data for which the electronic device 100 has received from the access point 200 the response informing that the data has been normally transmitted, and determine an average value of the calculated MCS levels as an MCS level of the second multi-band antenna

Although it is not illustrated in FIG. 6, the electronic device 100 and the access point 200 may repeat the above operations and determine an MCS level of all the multi-band antennas provided in the electronic device 100.

The electronic device 100 may select a multi-band antenna for transmitting data based on the MCS levels of the plurality of multi-band antennas provided in the electronic device 100 (S690). For example, the electronic device 100 may determine that the multi-band antenna with the highest MCS level has the highest data transmission rate based on the determined MCS levels of all the multi-band antennas, and select the multi-band antenna with the highest MCS level as a multi-band antenna for transmitting data to the access point 200.

As described above, according to one or more example embodiments, a multi-band antenna for transmitting data to an access point may be selected based on a data transmission rate, and accordingly, data may be transmitted in an optimal state in various communication environments.

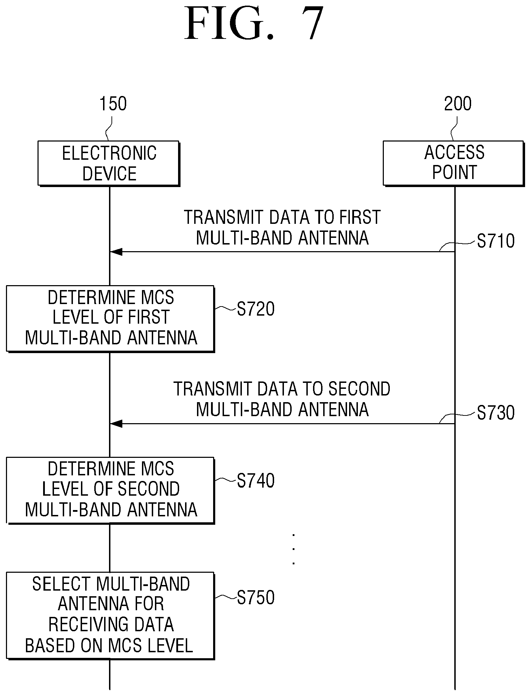

FIG. 7 is a flowchart illustrating an operation of when an electronic device receives data.

According to FIG. 7, the access point 200 may transmit data to the first multi-antenna of the electronic device 100 (S710). For example, if predetermined conditions are satisfied before or while the access point 200 transmits and receives data to and from the electronic device 100, the access point 200 may transmit predetermined data to the electronic device 100 through the first multi-band antenna of the electronic device 100. FIG. 7 illustrates the example in which predetermined data may be transmitted to the electronic device 100 through one multi-band antenna, but the example embodiments are not limited thereto. The first multi-band antenna may also be the first antenna mode which includes a plurality of multi-band antennas.

The electronic device 100 may determine the MCS level of the first multi-band antenna (S720). For example, the electronic device 100 may determine an MCS level of each of pieces of data which are normally received through the first multi-band antenna from among the plurality of pieces of data transmitted from the access point 200. The electronic device 100 may determine the average value of the MCS levels of the pieces of normally received data as an MCS level of the first multi-band antenna.

The access point 200 may transmit data to the second multi-band antenna of the electronic device 100 (S730).

The electronic device 100 may determine the MCS level of the second multi-band antenna (S740). The electronic device 100 may determine the MCS levels of the pieces of data which are normally received through the second multi-band antenna from among the plurality of pieces of data transmitted from the access point 200. The electronic device 100 may determine the average value of the MCS levels of the pieces of normally received data as an MCS level of the second multi-band antenna.

Although it is not illustrated in FIG. 7, the electronic device 100 and the access point 200 may repeat the above operations and determine the MCS levels of all the multi-band antennas provided in the electronic device 100.

The electronic device 100 may select the multi-band antenna for receiving data based on the determined MCS levels of all the multi-band antennas provided in the electronic device 100 (S750). For example, the electronic device 100 may determine that the multi-band antenna with the highest MCS level has the highest data transmission rate based on the determined MCS levels of all the multi-band antennas, and select the multi-band antenna as a multi-band antenna for receiving data from the access point 200.

As described above, according to one or more example embodiments, a multi-band antenna for transmitting data to an access point may be selected based on a data transmission rate, and accordingly, data may be received in an optimal state in various communication environments.

The aforementioned control method of the electronic device may be implemented as at least one execution program (or an application) for executing the method, and the execution program may be stored in a computer readable recording medium and be provided.

A computer readable recording medium may refer to a machine-readable medium or device that stores data semi-permanently and not for a short period of time, such as a register, cache, memory, and the like. The aforementioned applications or programs may be stored in a non-transitory computer readable medium such as a compact disc (CD), a digital versatile disc (DVD), a hard disk, a Blu-ray disc, a universal serial bus (USB) stick, a memory card, a ROM, etc.

The foregoing example embodiments and advantages are merely examples and are not to be construed as limiting the example embodiments. The description of the example embodiments is intended to be illustrative, and not to limit the scope of the inventive concept, as defined by the appended claims, and many alternatives, modifications, and variations will be apparent to those skilled in the art.

## Claims

1. An electronic device comprising:
a plurality of multi-band antennas configured to transmit and receive data to and from an access point; and
a processor configured to
transmit and receive predetermined data to and from the access point through each of the plurality of multi-band antennas,
calculate a data transmission rate of the plurality of multi-band antennas based on results of transmission or receipt of the predetermined data to or from the access point through the plurality of multi-band antennas, respectively, and
select at least one multi-band antenna, among the plurality of multi-band antennas, for transmitting and receiving the data to and from the access point based on the calculated data transmission rate of the plurality of multi-band antennas, respectively.

2. The electronic device of claim 1,
wherein the processor is further configured to
determine a modulation and coding scheme (MCS) level of the plurality of multi-band antennas based on the results of the transmission or receipt of the predetermined data, respectively, and
calculate the data transmission rate of the plurality of multi-band antennas based on the determined MCS level of the plurality of multi-band antennas, respectively.

3. The electronic device of claim 2,
wherein the processor is further configured to,
in response to the transmitting of the predetermined data, receive responses from the access point,
determine a response MCS level for the responses, respectively, and
determine an average of the response MCS level for the responses as the MCS level of the multi-band antenna which transmits the predetermined data.

4. The electronic device of claim 1, further comprising:
a switch configured to select one channel band for transmitting and receiving the data from among a plurality of channel bands of the plurality of multi-band antennas,
wherein the processor is further configured to
calculate the data transmission rate of the plurality of multi-band antennas in the plurality of channel bands, respectively,
select a multi-band antenna with a highest data transmission rate and a channel band thereof, and
transmit and receive the data to and from the access point in the selected channel band through the selected multi-band antenna.

5. The electronic device of claim 1,
wherein the processor is further configured to
determine a plurality of antenna modes, in which the plurality of multi-band antennas are combined, respectively, and
select a multi-band antenna included in an antenna mode with a highest data transmission rate among the determined plurality of antenna modes as the at least one multi-band antenna for transmitting and receiving the data to and from the access point.

6. The electronic apparatus of claim 5,
wherein the processor is further configured to adjust a ratio of a time of the plurality of antenna modes for which the data is transmitted and received based on an order of data transmission rates of the plurality of antenna modes.

7. The electronic device of claim 1,
wherein the processor is further configured to
calculate the data transmission rate of the plurality of multi-band antennas according to a predetermined period, respectively, and
select the at least one multi-band antenna for transmitting and receiving the data to and from the access point according to the calculated data transmission rate of the plurality of multi-band antennas for the predetermined period.

8. A control method of an electronic apparatus comprising:
transmitting or receiving predetermined data to or from an access point through a plurality of multi-band antennas, respectively, wherein the plurality of multi-band antennas being configured to transmit and receive data to and from the access point;
calculating a data transmission rate of the plurality of multi-band antennas based on results of the transmitted or received predetermined data to or from the access point through the plurality of multi-band antennas, respectively; and
selecting at least one multi-band antenna, among the plurality of multi-band antennas, for transmitting and receiving the data to and from the access point based on the calculated data transmission rate of the plurality of multi-band antennas, respectively.

9. The method of claim 8,
wherein the calculating the data transmission rate comprises
determining a modulation and coding scheme (MCS) level of the plurality of multi-band antennas based on the results of the transmitted and received predetermined data, respectively, and
calculating the data transmission rate of the plurality of multi-band antennas based on the determined MCS level of the plurality of multi-band antennas, respectively.

10. The method of claim 9,
wherein the transmitting or receiving comprises transmitting the predetermined data to the access point, and
wherein the determining the MCS level comprises
in response to transmitting the predetermined data, receiving responses from the access point,
determine a response MCS level for the responses, respectively, and
determining an average of the response MCS level for the responses as the MCS level of the multi-band antenna which transmits the predetermined data.

11. The method of claim 8,
wherein the calculating the data transmission rate comprises calculating a data transmission rate of the plurality of multi-band antennas in a plurality of channel bands, respectively, and
wherein the selecting the at least one multi-band antenna comprises
selecting a multi-band antenna with a highest transmission rate and a channel band thereof, and
transmitting and receiving the data to and from the access point in the selected channel band through the selected multi-band antenna.

12. The method of claim 8,
wherein the selecting the at least one multi-band antenna comprises
determining a plurality of antenna modes, in which the plurality of multi-band antennas are combined, respectively, and
selecting a multi-band antenna included in an antenna mode with a highest data transmission rate among the plurality of determined antenna modes as the at least one multi-band antenna for transmitting and receiving the data to and from the access point.

13. The method of claim 12, further comprising:
adjusting a ratio of a time of the plurality of antenna modes for which the data is transmitted and received based on an order of data transmission rates of the plurality of antenna modes.

14. The method of claim 8,
wherein the selecting the at least one multi-band antenna comprises
calculating the data transmission rate of the plurality of multi-band antennas according to a predetermined period, and
selecting the at least one multi-band antenna for transmitting and receiving the data to and from the access point according to the calculated data transmission rate of the plurality of multi-band antennas for the predetermined period.

15. A non-transitory computer readable recording medium including a program for performing a control method of an electronic apparatus, the method comprising:
controlling a plurality of multi-band antennas to transmit or receive predetermined data for calculating a data transmission rate between an access point and the plurality of multi-band antennas; and
selecting at least one multi-band antenna, among the plurality of multi-band antennas, for transmitting and receiving data to and from the access point based on the calculated data transmission rate of the plurality of multi-band antennas, respectively.
